## Europäisches Patentamt
## European Patent Office
## Office européen des brevets

(19)

(11) Numéro de publication: **0 016 668**
**B1**

(12) **FASCICULE DE BREVET EUROPEEN**

(45) Date de publication du fascicule du brevet: **25.05.83**

(51) Int. Cl.³: **B 25 J  13/02,** G 05 G  9/04, G 01 L  5/16

(21) Numéro de dépôt: **80400192.3**

(22) Date de dépôt: **07.02.80**

(54) Manipulateur six axes.

(30) Priorité: **22.03.79 FR  7907254**

(43) Date de publication de la demande:
**01.10.80 Bulletin 80/20**

(45) Mention de la délivrance du brevet:
**25.05.83 Bulletin 83/21**

(84) Etats contractants désignés:
**DE GB IT SE**

(56) Documents cités:
**FR - A - 2 211 137**
**FR - A - 2 306 798**
**FR - A - 2 312 070**
**GB - A - 2 006 435**
**US - A - 3 693 425**
**US - A - 3 921 445**
**US - A - 3 952 880**

**IBM TECHNICAL DISCLOSURE BULLETIN, vol. 13, no. 2, juillet 1970, New York, US, C. J. EVANGELISTI et al.: "Manipulator", pages 578—579**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Figour, Jean**
**18 Avenue des Jansénistes**
**F-78320 Le Mesnil Saint Denis (FR)**

(74) Mandataire: **Jacques, Max et al,**
**RNUR - S. 0804 BP 103**
**F-92109 Boulogne Billancourt (FR)**

Courier Press, Leamington Spa, England.

## Manipulateur six axes

La présente invention est relative à un manipulateur utilisé à la commande d'un robot selon au moins six axes encore appelé syntaxeur permettant une commande évoluée d'un robot tel que, par exemple, un robot de soudure sur portique ayant six degrés de liberté ou un robot de peinture ayant plus de six degrés de liberté avec une certaine redondance des axes.

D'un point de vue ergonomique, on se rend compte que tout être humain peut agir facilement dans un trièdre des axes rectilignes pour ce qui est des déplacements et dans un trièdre d'axes de rotation orthogonaux pour ce qui est des orientations. Le problème est de mettre au point un manipulateur permettant d'agir avec une seule main sur un robot six axes et permettant toute combinaison de mouvements entre les déplacements et les orientations. Dans la programmation d'un robot, l'opérateur s'intéresse spécialement à la pointe de l'outil ou à un élément de surface lié à l'outil. C'est cet élément que l'on désigne du nom de terminal du robot. Pour faciliter le travail de l'opérateur, il est important que les mouvements du terminal du robot commandé se fassent par rapport au référentiel naturel de l'homme qui pilote, quelle que soit la configuration du robot: que ce soit par exemple un robot de type cartésien à six axes dans lequel les déplacements sont des translations ou un robot à six axes dans lequel les déplacements sont des rotations.

L'opérateur exécute intuitivement les mouvements de rotation par la rotation de la main dans le poignet tandis que les mouvements rectilignes sont exécutés par des mouvements de déplacement de l'avant-bras.

L'état de la technique relatif à la présente invention pourrait être défini par les documents suivants:

— Le brevet américain 3 693 425 décrit un appareil de mesure relatif à un système ne comportant que quatre axes. Toutefois, dans l'appareil décrit les efforts en translation en X et Y se traduisent nécessairement par un moment sur les paliers ce que implique le secours à des moyens de calcul pour obtenir le découplage entre les différentes composantes.
— Le brevet français no. 2 306 798 décrit l'utilisation des moyens de détection d'une antenne fouet comprenant quatre vis de contact réglables et agencées à des intervalles de 90° autour de l'antenne pour réaliser la détection de contact des axes X et Y.

La présente invention met à la disposition de l'opérateur un manipulateur comportant une poignée qui peut être facilement manipulée par l'opérateur d'une seule main à partir des mouvements qui lui sont ergonomiquement naturels. Ce manipulateur lui permet de diriger à vue l'extrémité d'un robot comportant au minimum six axes indépendants afin de faire décrire à ladite extrémité toute trajectoire désirée.

Suivant l'invention, le manipulateur six axes à la disposition d'un opérateur manuel susceptible de le manipuler d'une seule main afin de diriger à vue l'extrémité d'un robot comportant au minimum six axes indépendants afin de faire décrire à ladite extrémité une trajectoire désirée, permettant à l'opérateur qui l'utilise de travailler dans le référentiel naturel à tout être humain, qui est du type comportant des moyens permettant de décomposer et de mesurer chaque élément de trajectoire désiré, d'une part, suivant ses composantes de translation dans un premier trièdre trirectangle fixe dans l'espace et simultanément, d'autre part, suivant ses composantes de rotation autour de trois axes orthogonaux et fixes dans l'espace, les moyens de décomposition et de mesure selon chaque axe étant totalement découplés par rapport aux moyens de décomposition et de mesure selon tous les autres axes; et des moyens logiques comportant notamment une interface permettant de convertir, après numérisation, l'ensemble des informations recueillies par la décomposition de chaque élément de trajectoire désiré à l'aide desdits moyens de décomposition et de mesure en signaux de commande applicables directement aux organes contrôlant les mouvements du robot suivant chacun de ses axes, caractérisé en ce qu'il comporte: un support tubulaire central équipé de quatre ouvertures à 90° les unes des autres disposées substantiellement dans un plan perpendiculaire à l'axe du support tubulaire; un anneau de diamètre supérieur à celui d'une section dudit support tubulaire, ledit anneau supportant si nécessaire une poignée de préhension et de commande dudit manipulateur; des moyens de support élastiques dudit anneau par ledit support tubulaire de telle manière qu'au repos ledit anneau se présente coaxialement par rapport audit support tubulaire et en ce que chaque ouverture est équipée d'au moins quatre capteurs de force, comme il est connu en soi.

Suivant un premier mode de réalisation, lesdits moyens de support élastiques dudit anneau par ledit support tubulaire comprennent deux barreaux tendus en croix et quatre bagues élastiques supportant souplement lesdits barreaux à leurs extrémités dans ledit anneau, lesdits barreaux traversant chacun ledit support tubulaire par deux ouvertures ménagées dans ce dernier et diamétralement opposées sur ce dernier.

Suivant un second mode de réalisation, les dits moyens de support élastiques du dit anneau par le dit support tubulaire comprennent quatre cordes à piano encastrées chacune par une extrémité dans ledit anneau et coulissant par la seconde extrémité dans l'une des ouvertures ménagées dans ledit support tubulaire central pour assurer une liberté de flexion à chaque corde à piano.

Par corde à piano, on désigne un fil d'acier, inoxydable ou non, étiré à froid, de haute résistance.

Suivant une première caractéristique de réalisation, chaque ouverture ménagée dans ledit support tubulaire est équipée d'un palier capteur de force à au moins quatre directions d'après le nombre de contacts uniformément répartis à la périphérie de chaque ouverture.

Suivant une seconde caractéristique de réalisation, chaque palier capteur de force équipant chaque ouverture ménagée dans ledit support tubulaire comporte successivement du centre de ladite ouverture jusqu'à la périphérie intérieure de celle-ci et coaxialement disposés: une corde à piano; une bague conductrice revêtue extérieurement d'une substance isolante devenant conductrice au-delà d'une pression déterminée et une bague isolante, les contacts du palier capteur de force étant uniformément répartis sur une circonférence entre ladite substance isolante et ladite bague isolante si bien que l'on réalise un manipulateur fonctionnant par tout ou rien.

Suivant une variante de réalisation, chaque contact est constitué par un capteur piézoélectrique alimenté par un générateur H. F. fonctionnant à l'antirésonance si bien que l'on réalise un manipulateur à commande proportionnelle.

Avantageusement, les capteurs diamétralement opposés en bordure d'une ouverture déterminée sont connectés en entrées sur un même sommateur en vue de l'addition algébrique de leurs signaux avant communication aux moyens logiques comportant une interface permettant une conversion analogique numérique des informations recueillies.

D'autres caractéristiques ressortiront de la description qui suit et qui n'est donnée qu'à titre d'exemple. A cet effet, on se reportera aux dessins joints dans lesquels:—

la figure 1 est un schéma de principe situant la position du manipulateur six axes suivant l'invention par rapport à un robot à six axes dont il convient de commander les déplacements;

la figure 2 est une représentation de principe en coupe par un plan de symétrie passant par l'axe ZZ' du manipulateur suivant l'invention;

la figure 3 est une représentation de principe en coupe par un plan de trace III III sur la figure 6 du manipulateur suivant l'invention en position de repos;

la figure 6 est une représentation de principe, fragmentaire, en coupe par un plan de trace VI VI à la figure 3 du manipulateur en position de repos;

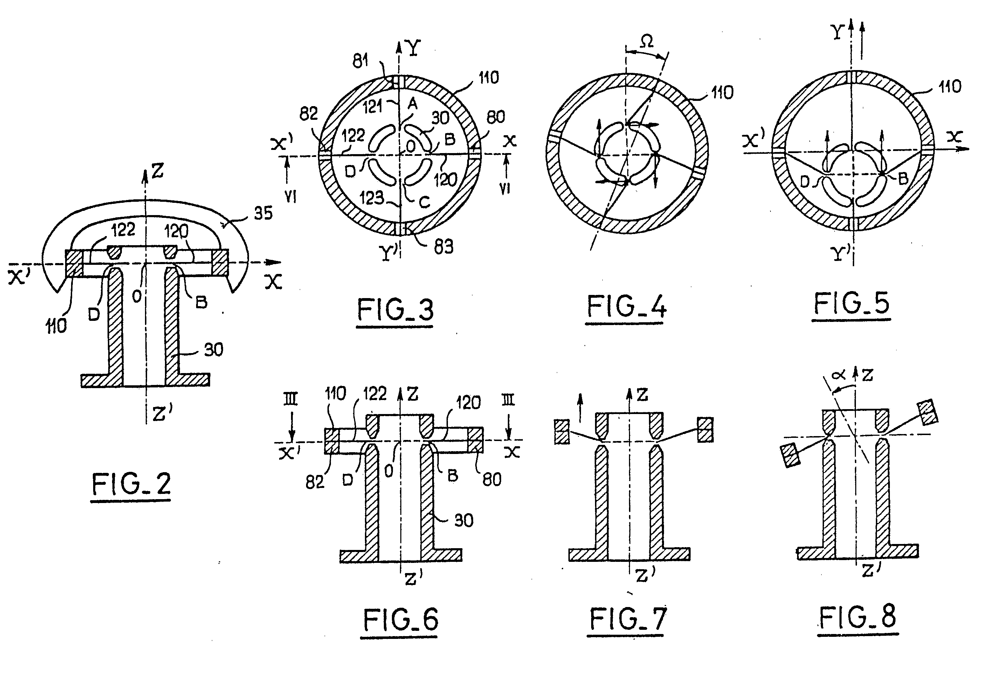

les figures 4 et 7, d'une part, les figures 5 et 8, d'autre part, sont des représentations semblables à celles des figures 3 et 6, le premier groupe dans la cas d'une rotation d'un angle $\Omega$ autour de l'axe ZZ' et d'une translation parallèlement à cet axe, le second groupe dans le cas d'une rotation d'un angle $\alpha$ autour de l'axe YY' et d'une translation parallèlement à ce dernier;

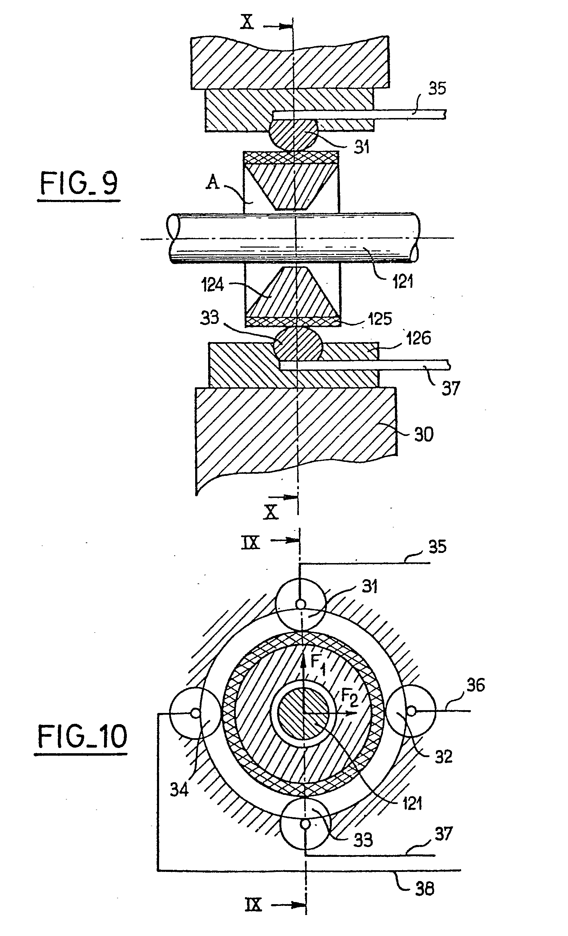

la figure 9 est une représentation en section par un plan de trace IX IX à la figure 10 d'un palier capteur de force;

la figure 10 est une représentation en section par un plan de trace X X à la figure 9 d'un palier capteur de force suivant l'invention;

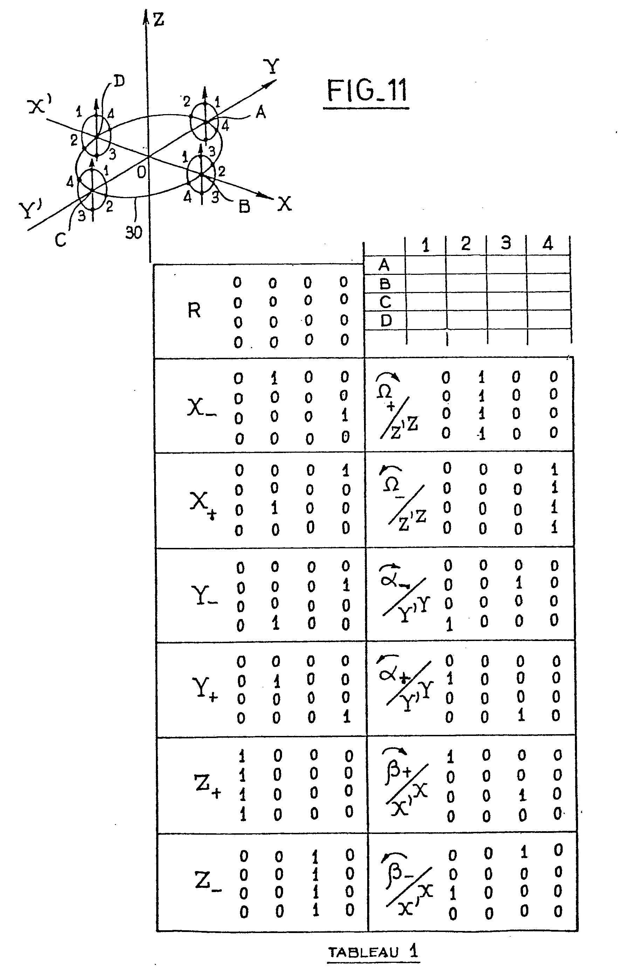

la figure 11 est un schéma de principe du manipulateur suivant l'invention résumant la position des quatre paliers capteurs de force et sur chacun d'eux la position des quatre contacts aidant à la compréhension du tableau 1;

le tableau 1 récapitule les matrices donnant l'état des contacts pour chaque translation élémentaire et chaque rotation élémentaire;

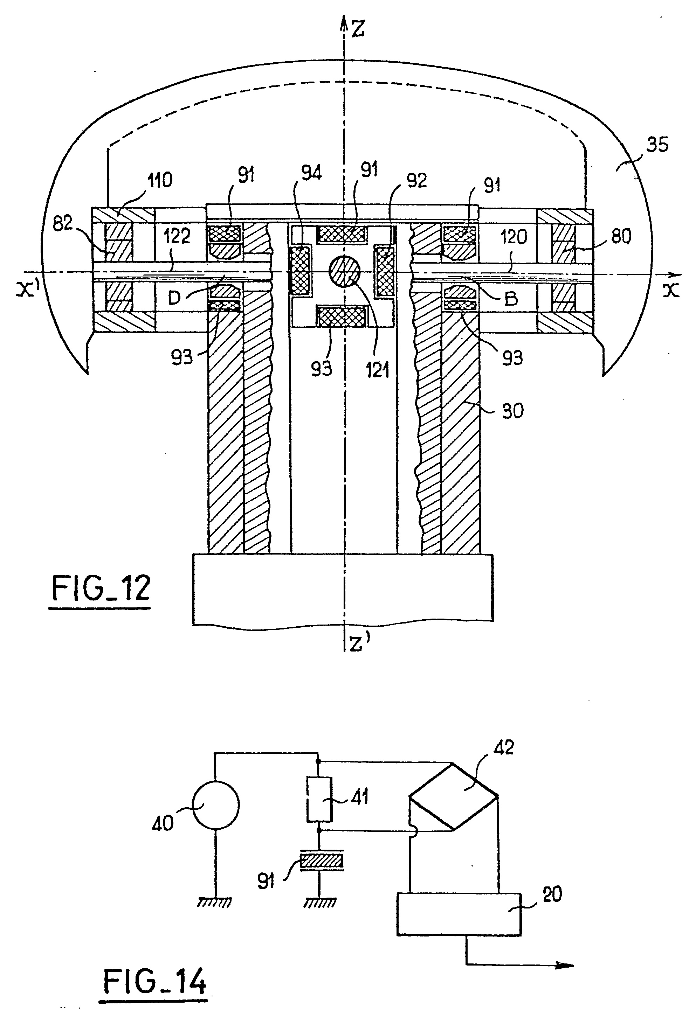

la figure 12 est un schéma de principe en coupe par le plan de symétrie XOZ d'un second mode de réalisation du manipulateur six axes suivant la présente invention;

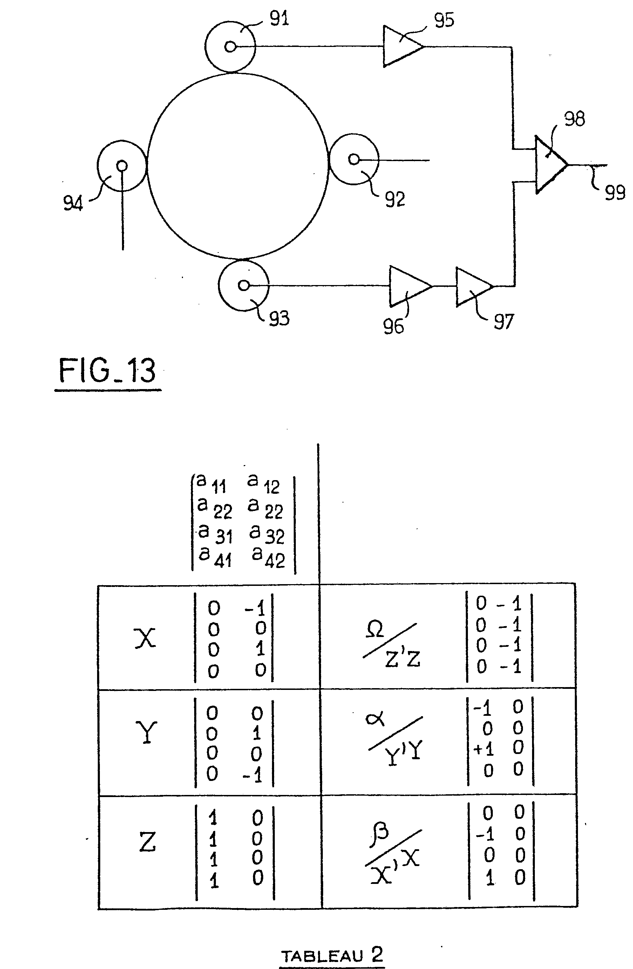

la figure 13 est un schéma de principe illustrant un mode de groupement des contacts sur un palier;

le tableau 2 récapitule les nouvelles matrices simplifiées résultant du groupement des contacts illustré à la figure 13; et,

la figure 14 est un schéma simplifié indiquant comment fonctionnent les contacts dans le second mode de réalisation du manipulateur suivant l'invention.

Les mêmes références numériques désignent les mêmes éléments sur les différentes figures.

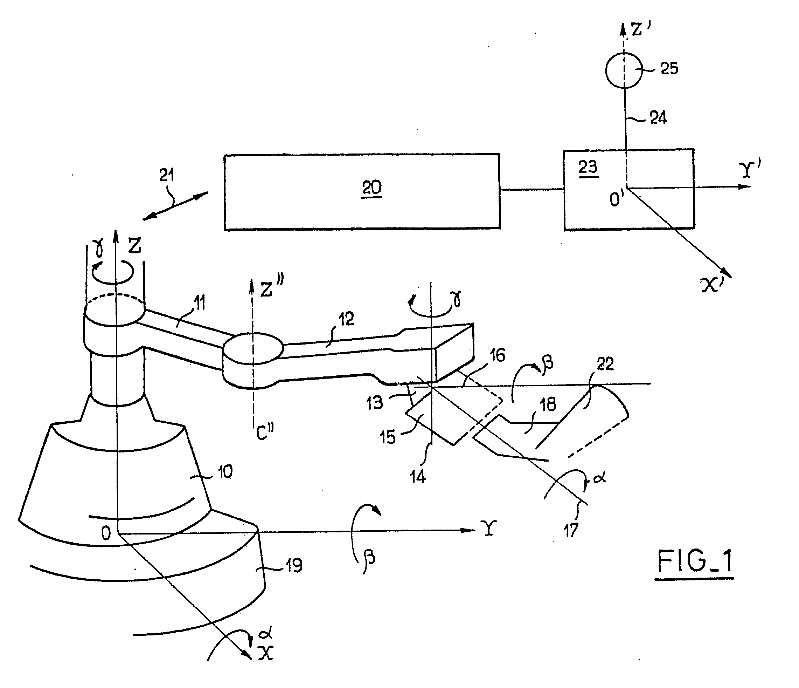

A la figure 1, on a représenté de façon succincte, à titre d'exemple, un robot 10 capable de déplacer un outil 22 par la combinaison de six mouvements élémentaires: deux rotations autour des axes verticaux respectifs OZ et O''Z''; une translation d'axe OZ correspondant à un mouvement de monte et baisse; trois rotations d'angles $\alpha$, $\beta$ et $\gamma$.

Le robot 10 comporte un bras 11 et un avant-bras 12 à l'extrémité duquel un poignet 13 peut pivoter d'un angle $\gamma$ autour d'un premier axe 14. Une main 15 peut pivoter d'un angle $\beta$ autout d'un second axe 16 et un équipement terminal 18 auquel on peut adapter un outil 22 est susceptible de pivoter d'un angle $\alpha$ autour d'un troisième axe 17. A chacune de ses articulations, le robot comporte un moteur rotatif auquel est associé un codeur de position. Pour plus de précisions à ce sujet, on peut se reporter à la demande de brevet no. 75-15 127 (publ. 2 310 842) déposée par la demanderesse le 15 mai 1975 pour "tête pour robot ou manipulateur comportant au moins un axe de rotation". Les différents moteurs rotatifs et leurs codeurs de positions associés sont reliés à un calculateur pilote 20 par l'intermédiaire d'un faisceau de câbles représentés schématiquement par une flèche 21 à double extrémité fléchée pour bien indiquer que la liaison entre le calculateur 20 et le robot 10 s'effectue dans les deux sens. Suivant l'invention, l'extrémité 18 du robot à laquelle peut être adapté un outil 22 est pilotée à vue par un opérateur humain à l'aide d'un dispositif de commande comportant notamment un boîtier 23 de commande avec un manche à balai 24 à six degrés de liberté qui est manipulé à l'aide d'une seule main grâce à une poignée 25 de forme facilement préhensible par exemple sphérique.

L'opérateur manipulant le manche à balai 24 d'une seule main par l'intermédiaire de la poignée 25 fait décrire une trajectoire désirée au terminal 18 du robot 10. La manoeuvre est facilitée pour l'opérateur par le fait que le dispositif de commande suivant l'invention permet à l'opérateur qui l'utilise de travailler dans son référentiel naturel. Dans le case de la figure 1, il s'agit pour les déplacements d'un trièdre trirectangle OXYZ et pour les rotations de l'ensemble des trois rotations autour des axes respectifs du trièdre précédent. L'orientation du trièdre OXYZ est quelconque mais fixée une fois pour toutes par rapport à l'atelier dans lequel évolue le robot. Le boîtier manipulateur 23 est orienté pour son utilisation de façon que son propre trièdre de référence O'X'X'X' soit parallèle au trièdre précédent, ce qui fait que, pour la suite de la description, les deux trièdres seront considérés comme confondus. Les composantes de translation et les composantes de rotation qui sont détectées périodiquement grâce aux moyens contenus dans le boîtier de commande 23 sont transmises au calculateur 20 qui, à l'aide d'un algorithme approprié, transforme, après numérisation, les informations analogiques reçues à l'entrée en signaux de commande de forme appropriée pour être alors, par l'intermédiaire du faisceau de câbles 21, directement appliqués aux différents moteurs logés dans les articulations successives du robot 10. L'opérateur, en regardant le robot, observe ses déplacements, les compare aux ordres qu'il a donnés et corrige à chaque instant selon le résultat qu'ill veut obtenir.

Suivant la figure 2 qui est une représentation de principe en coupe par le plan de symétrie XOZ d'un premier mode de réalisation du manipulateur six axes suivant l'invention, un support tubulaire central 30 est percé de quatre ouvertures A, B, C, D qui sont toutes représentées à la figure 3. Ces quatre ouvertures sont à 90° les unes des autres et situées toutes dans un plan XOY perpendiculaire à l'axe ZZ'.

Une poignée 35 possède six degrés de liberté et dont le centre coïncide avec le point 0 d'intersection des trois axes XX', YY', ZZ', repose sur un anneau 110 supporté par le support tubulaire central 30 par l'intermédiaire de quatre corps déformables 120, 121, 122 et 123. Ces corps déformables sont constitués par exemple par de la corde à piano, c'est-à-dire du fil d'acier inoxydable ou non, étiré à froid et de haute résistance. Suivant le premier mode de réalisation illustré aux figures 2 à 10, chaque corde à piano 120, 121, 122 et 123 est encastrée dans l'anneau 110 à son extrémité extérieure 80, 81, 82, 83 respectivement, tandis qu'elle peut coulisser librement par son extrémité intérieure dans l'une des ouvertures A, B, C, D ménagées au voisinage immédiat de l'extrémité supérieure du support tubulaire 30.

Suivant un second mode ae réalisation dont il sera question ultérieurement à l'occasion de la description des figures 12 à 14 et du tableau 2, les corps déformables ne sont que deux, à savoir deux barreaux 120—122, d'une part, 121—123, d'autre part, disposés en étoile à 90°. Ces deux barreaux traversent chacun le support tubulaire 30 par deux ouvertures disposées en ligne groite, notamment les ouvertures A et C pour le barreau 120—122 et les ouvertures B et D pour le barreau 121—123. Dans ce dernier cas, l'élasticité de l'anneau 110 et de la poignée de manipulation 35 relativement au support tubulaire central 30 est obtenue par des bagues en élastomère 80, 81, 82, 83 reliant chaque barreau à l'anneau à ses deux extrémités comme on le voit à la figure 12.

Quel que soit le mode de réalisation, on voit donc bien qu'entre l'anneau 110 supportant la poignée de manipulation 35 et le support tubulaire central 30, des moyens de support à la fois rigides et élastiques sont prévus de telle manière qu'au repos ledit anneau équipé de sa poignée se présente coaxialement par rapport au support tubulaire comme représenté aux figures 3 et 6.

Les figures 3 et 6 représentent dans sa position d'équilibre des coupes du manipulateur suivant l'invention, la figure 3 notamment, une coupe suivant un plan de trace III III à la figure 6 correspondant au plan XOY d'un trièdre trirectangle dont l'axe X'Z est confondu avec l'axe de symétrie vertical du manipulateur, la figure 6 représentant une coupe suivant un plan de trace VI VI à la figure 3 qui correspond à la face XOZ du trièdre trirectangle. Les figures 4 et 5 représentent des coupes semblables à celle de la figure 3 tandis qua les figures 7 et 8 représentent des coupes semblables à celle de la figure 6. Les figures 4 et 7 représentent en coupe le manipulateur suivant le premier mode de réalisation dans le cas où l'operateur humain a fait subir par manipulation de la poignée 35 une rotation de l'anneau 110 d'un angle $\Omega$ autour de l'axe ZZ' (figure 4) et une translation de l'anneau 110 parallèlement à l'axe ZZ' (figure 7).

Les figures 5 et 8 représentent en coupe le manipulateur suivant le premier mode de réalisation dans le cas où l'opérateur humain a fait subir une translation de l'anneau 110 parallèlement à l'axe Y'Y (figure 5) et une rotation de l'anneau 110 de l'angle $\alpha$ autour de l'axe Y'Y (figure 8). On imagine aisément les figures pouvant résulter d'une translation de l'anneau 110 parallèlement à l'axe X'X et d'une rotation de l'anneau 110 d'un angle $\beta$ autour de l'axe X'X.

La figure 9 est une représentation en section par un plan de trace IX IX à la figure 10 d'un palier capteur de force équipant suivant le premier mode de réalisation chacune des ouvertures A, B, C et D et la figure 10 est une representation en section suivant un plan de trace X X à la figure 9 du même palier capteur de force. Suivant cette représentation, supposant être dans le cas de l'ouverture A des figures précédentes, on trouve successivement en allant du centre de l'ouverture à sa périphérie: le corps déformable ou corde à piano 121 coulissant librement dans une bague conductrice 124 avec un débattement angulaire de l'ordre d ±15°. Cette bague conductrice 124 est revêtue à sa périphérie extérieure d'une substance isolante 125 devenant conductrice au-delà d'une pression déterminée. C'est une sorte de peau artificielle que l'on trouve dans le commerce devenant conductrice pour des pressions supérieures à 20 g/mm2. Le support tubulaire 30 est recouvert à la périphérie intérieure de l'ouverture ménagée en lui d'une bague isolante 126. Le palier comprend enfin quatre contacts 31, 32, 33, 34 constitués par des billes disposées à 90° les unes des autres et supportées par la bague isolante 126. Ces billes ou contacts tout ou rien 31, 32, 33, 34 se prolongent à l'extérieur par des conducteurs 35, 36, 37, 38 transmettant les signaux aux moyens logiques 20 de la figure 1 qui interviennent comme intermédiaire obligatoire du robot à commander. On a représenté quatre contacts, mais il est bien évident que ce nombre n'est nullement limitatif et qu'il est à la portée de l'homme de métier d'en concevoir un nombre différent. Tout effort radial transmis par le corps déformable 121 est reporté sur la bague extérieure 126 par l'intermédiaire de la peau 125 et de la bille la plus proche 33 par exemple, qui peut alors fermer le contact correspondant avec la bague conductrice 124 au travers de la peau 125. Le conducteur 37 attaché à la bille 33 transmet alors une impulsion en direction des moyens logiques associés 20. A la figure 10, on voit qu'un effort suivant $\bar{F}_1$ ferme le contact 31 procurant une impulsion sur le conducteur 35, tandis qu'on effort suivant $\bar{F}_2$ ferme le contact 32 procurant une impulsion sur le conducteur 36.

La figure 11 résume la situation dans une représentation en perspective en réduisant le support tubulaire central 30 à un simple cercle sur lequel sont figurés les emplacements des ouvertures A, B, C et D, par exemple à l'intersection du cercle 30 et des axes de coordonnés XX' et YY' et en représentant en liaison avec chaque ouverture les quatre contacts associés formant son palier capteur et désignés dans chaque cas par les références numériques 1, 2, 3, 4 en tournant dans le sens des aiguilles d'une montre sur chaque cercle représentant une ouverture, le tout dans le référentiel de référence XYZ. On a donc un ensemble de seize contacts dont on peut représenter les étants dans une matrice carrée de quatre lignes correspondant aux quatre ouvertures A, B, C, D et de quatre colonnes correspondant aux quatre contacts 1, 2, 3, 4.

Dans le tableau 1, on a représenté dans la colonne de gauche les matrices de translation correspondant aux situations successives suivantes: de haut en bas: repos; direction des X positifs; direction de X négatifs; direction des Y positifs; direction des Y négatifs; direction des Z positifs; direction des Z négatifs. Dans la colonne de droite, on a représenté les matrices de rotation correspondant aux situations suivantes de haut en bas: rotation autour de l'axe Z'Z dans le sens positif; rotation autour de l'axe Z'Z dans le sens négatif; rotatin autour de l'axe Y'Y dans le sens positif; rotation autour de l'axe Y'Y dans le sens négatif; rotation autour de l'axe X'X dans le sens positif; rotation autour de l'axe X'X dans le sens négatif. Les signaux correspondants sont transmis aux moyens logiques 20 associés qui sont parfaitement à même de les interpréter et de les traduire en commandes appropriées pour les différentes parties du robot associé.

La figure 12 illustre en section par le plan de symétrie XOZ avec arrachement partiel dans la partie centrale du second mode de réalisation du manipulateur six axes suivant l'invention. Ce mode de réalisation a déjà été évoqué précédemment. On ajoute donc simplement que dans ce mode de réalisation les contacts 31 à 34 décrits à l'aide des figures 9 et 10 sont remplacés par quatre capsules piézoélectriques 91, 92, 93, 94 par palier. Tout déplacement de la poignée 35 qui possède six degrés de liberté crée une déformation des bagues en élastomère 80, 81, 82, 83. Cette déformation se traduit par des efforts appliqués sur les deux barreaux 120—122; 121—123. Ces efforts sont transmis aux capsules piézoélectriques qui entourent les barreaux.

Si l'on groupe les signaux prélevés sur les capsules piézoélectriques, entourant un barreau déterminé au niveau d'une ouverture déterminée du support tubulaire central 30 comme indiqué à la figure 13: par exemple, le signal prélevé sur la capsule piézoélectrique 91 est transmis à une entrée d'un dispositif additionneur algébrique 98 par l'intermédiaire d'un amplificateur 95 tandis que le signal prélevé sur la capsule piézoélectrique 93 diamétralement opposée à la capsule 91 par rapport au barreau considéré est transmis à une seconde entrée de l'additionneur algébrique 98 par l'intermédiaire d'un second amplificateur 96 et d'un inverseur 97; l'on groupe de même, dans un second circuit identique, les signaux prélevés sur les deux autres capsules piézoélectriques 92 et 94 relatives au même barreau et à la même ouverture; on traite de même toutes les capsules piézoélectriques relatives aux autres ouvertures et l'on recueille simplement les signaux à la sortie 99 des sommateurs 98; on démontre facilement alors que l'on peut réduire le système des douze matrices indiquées dans le tableau 1 aux six matrices représentées au tableau 2 dans lequel les trois matrices de gauche correspondent aux trois mouvements de translation suivant les trois axes XX', YY' et ZZ' du trièdre trirectangle XYZ tandis que les trois matrices de droite correspondent à des rotations autour de chacun des axes du trièdre trirectangle. Pour chaque information donnée par le manipulateur, on a donc un ensemble de six valeurs analogiques correupondant aux poids respectifs des six mouvements élémentaires.

Suivant la représentation de la figure 14, un générateur HF 40 calé à l'antirésonance alimente en parallèle les seize capsules piézoélectriques que comprend le manipulateur de la figure 12. On a représenté une seule de ces capsules à la figure 14. Toute variation de pression sur une de ces capsules provoque une variation de la tension $V_s$ prélevée aux bornes d'une résistance 41 reliée en série entre le générateur HF 40 et chaque capsule 91. Ce signal $V_s$ est redressé dans un point de redresseurs 42 et traité dans les moyens logiques 20 qui comportent notamment des circuits tels que ceux illustrés à la figure 13 et un convertisseur analogique-numérique. Les variations du signal $V_s$ et de tous les autres signaux analogiques sont traitées pour obtenir une commande de vitesse du terminal du robot qui soit proportionnelle à la variation du signal $V_s$.

## Revendications

1. Manipulateur six axes à la disposition d'un opérateur manuel susceptible de le manipuler d'une seule main afin de diriger à vue l'extrémité (18) d'un robot (10) comportant au minimum six axes indépendants afin de faire décrire à ladite extrémité une trajectoire désirée permettant à l'opérateur qui l'utilise de travailler dans le référentiel naturel à tout être humain, comportant des moyens (23) permettant de décomposer et de mesurer chaque élément de trajectoire désiré, d'une part, suivant ses composantes de translation dans un premier trièdre trirectangle fixe dans l'espace (OXYZ) et simultanément, d'autre part, suivant ses composantes de rotation autour de trois axes orthogonaux et fixes dans l'espace, les moyens de décomposition et de mesure selon chaque axe étant totalement découplés par rapport aux moyens de décomposition et de mesure selon tous les autres axes; et des moyens logiques (20) comportant notamment une interface permettant de convertir après numérisation l'ensemble des informations recueillies par la décomposition de chaque élément de trajectoire désiré à l'aide desdits moyens de décomposition et de mesure en signaux de commande applicables directement aux organes contrôlant les mouvements du robot suivant chacun de ses axes, caractérisé en ce qu'il comporte: un support tubulaire central (30) équipé de quatre ouvertures (A, B, C, D) à 90° les unes des autres disposées substantiellement dans un plan perpendiculaire à l'axe du support tubulaire; un anneau (110) de diamètre supérieur à celui d'une section du dit support tubulaire, ledit anneau supportant si nécessaire un poignée (35) de préhension et de commande dudit manipulateur; des moyens de support (120) élastiques dudit anneau par ledit support tubulaire (30) de telle manière qu'au repos ledit anneau se présente coaxialement par rapport audit support tubulaire (30) et en ce que chaque ouverture (A, B, C, D) est équipée d'au moins quatre capteurs de force (1, 2, 3, 4) comme il est connu en soi.

2. Manipulateur six axes suivant la revendication 1 caractérisé en ce que les dits moyens de support élastiques (120) du dit anneau (110) par le dit support tubulaire (30) comprennent deux barreaux (120—122; 121—123) tendus en croix, et quatre bagues élastiques (80, 81, 82, 83) supportant souplement les dits barreaux à leurs extrémités dans le dit anneau, les dits barreaux traversant chacun le dit support tubulaire (30) par deux ouvertures (A—C; B—D) ménagées dans ce dernier et diamétralement opposées sur ce dernier.

3. Manipulateur six axes suivant la revendication 1, caractérisé en ce que les dits moyens de support élastiques (120) dudit anneau (110) par ledit support tubulaire (30) comprennent quatre cordes à piano (120, 121, 122, 123) encastrées chacune par une extrémité dans ledit anneau (110) et coulissant par la seconde extrémité dans l'une des ouvertures (A, B, C, D) ménagées dans ledit support tubulaire central (30) pour assurer une liberté de flexion à chaque corde à piano.

4. Manipulateur six axes suivant l'une quelconque des revendications précédentes caractérisé en ce que chaque ouverture (A, B, C, D) ménagée dans ledit support tubulaire (30) est équipée d'un palier capteur de force à au moins quatre directions d'après le nombre de contacts (1, 2, 3, 4; 31, 32, 33, 34; 91, 92, 93, 94) uniformément répartis à la périphérie de chaque ouverture.

5. Manipulateur six axes suivant la revendication 4, caractérisé en ce que chaque palier capteur de force équipant chaque ouverture ménagée dans ledit support tubulaire comporte successivement du centre de ladite ouverture jusqu'à la périphérie intérieure de celle-ci et coaxialement disposés: une corde à piano (121); une bague conductrice (124) revêtue extérieurement d'une substance isolante (125) devenant conductrice au-delà d'une pression déterminée et une bague isolante (126), les contacts (31, 32, 33, 34) du palier capteur de force étant uniformément répartis sur une circonférence entre ladite substance isolante (125) et ladite bague isolante (126) si bien que l'on réalise un manipulateur fonctionnant par tout ou rien.

## 11  0 016 668  12

6. Manipulateur six axes suivant la revendication 4, caractérisé en ce que chaque contact (91, 92, 93, 94) est constitué par un capteur piézoélectrique alimenté par un générateur H.F. fonctionnant à l'antirésonance si bien que l'on réalise un manipulateur à commande proportionnelle.

7. Manipulateur six axes suivant la revendication 6, caractérisé en ce que les capteurs diamétralement opposés (91—93; 92—94) en bordure d'une ouverture déterminée (A, B, C, D) sont connectés en entrées sur un même sommateur en vue de l'addition algébrique de leurs signaux avant communication aux moyens logiques (20) comportant une interface permettant une conversion analogique numérique des informations recueillies.

## Patentansprüche

1. Sechsachsige Bedienungsvorrichtung für eine Bedienungsperson, die diese Vorrichtung mit einer einzigen Hand bedienen soll, um nach Sicht das Ende (18) eines wenigstens sechs unabhängige Achsen aufweisenden Robotgeräts (10) zu lieten, derart, dass dieses Ende eine Bahn durchläuft, die es der Bedienungsperson gestattet, innerhalb des jedem Menschenwesen eigenen, natürlichen Bezugssystems zu arbeiten, mit Mitteln zum Zerlegen und Messen eines jeden gewünschten Elementes der Bahn, einerseits gemäss der Translationskomponenten in einem ersten raumfesten drei-recht= winkligen Trieder (OXYZ) und gleichzeitig andereseits gemäss der Drehkomponenten in bezug auf drei raumfeste orthogonale Achsen, wobei die Zerlegungs= und Messmittel gemäss einer Achse von den Zerlegungs= und Messmitteln gemäss aller anderen Achsen völlig unabhängig sind; ferner mit logischen Mitteln (20), welche insbesondere eine Trennfläche aufweisen, die nach Umwandlung in numerische Werte gestattet, alle durch die Zerlegung jedes gewünschten Bahnelementes vermittels der Zerlegungs= und Messmittel erhaltenen Informationen in Steuersignale umzuwandeln, die unmittelbar an die die Bewegungen des Robotgeräts in bezug auf jede seiner Achsen steuernden Organe übertragbar sind, dadurch gekennzeichnet, dass sie umfasst: einen mittleren rohrförmigen Halter (30) mit vier gegeneinander um je 90° versetzten, wesentlich in einer zur Achse des rohrförmigen Halters senkrechten Ebene angeordneten Offnungen (A, B, C, D); einen Ring (110), dessen Durchmesser grösser ist, als derjenige eines Querschnitts des genannten rohrförmigen Halters, und welcher gegebenenfalls einen Griff (35) zum Ergreifen und Bedienen der Bedienungsvorrichtung trägt; elastische Haltemittel (120), die den Ring auf dem rohrförmigen Halter (30) derart halten, dass der Ring in der Ruhestellung koaxial zum rohrförmigen Halter (30) ist, sowie dadurch, dass jede der Offnungen (A, B, C, D) in an sich bekannter Weise mit wenigstens vier Kraftaufnehmern (1, 2, 3, 4) versehen ist.

2. Sechsachsige Bedienungsvorrichtung nach Anspruch 1, dadurch gekennzeichnet, dass die elastischen Haltemittel (120) zum Halten des Rings (110) am rohrförmigen Halter (30) zwei kreuzweise angeordnete Stäbe (120—122; 121—123) und vier elastische Ringteile (80, 81, 82, 83) aufweisen, welche letztere. die genannten Stäbe an ihren Enden elastisch in dem genannten Ring halten, wobei jeder dieser Stäbe den rohrförmigen Halter (30) vermittels zweier in demselben angeordneter, diametral einander gegenüberliegender Offnungen (A—C; B—D) durchquert.

3. Sechsachsige Bedienungsvorrichtung nach Anspruch 1, dadurch gekennzeichnet, dass die elastischen Haltemittel (120) zum Halten des Ringes (110) an dem rohrförmigen Halter (30) vier Stahlsaiten (120, 121, 122, 123) umfassen, wobei ein Ende jeder Stahlsaite in den Ring (110) eingebettet ist, während das zweite Ende in einer der Offnungen (A, B, C, D) gleitet, die im mettleren rohrförmigen Halter (30) angeordnet sind, derart, dass jede Stahlsaite sich frei biegen kann.

4. Sechsachsige Bedienungsvorrichtung nach einem der vorstehenden Ansprüche, dadurch gekennzeichnet, dass jede der in dem rohrförmigen Halter (30) angeordneten Öffnungen (A, B, C, D) ein Kraftaufnehmerlager mit wenigstens view Richtungen aufweist, nach Massgabe der Anzahl der Kontakte (1, 2, 3, 4; 31, 32, 33, 34; 91, 92, 93, 94), die regelmässig über den Umfang jeder Öffnung verteilt sind.

5. Sechsachsige Bedienungsvorrichtung nach Anspruch 4, dadurch gekennzeichnet, dass jedes der je in einer der in dem rohrförmigen Halter angeordneten Öffnungen vorgesehenen Kraftaufnehmerlager vom Zentrum der Öffnung aus bis zum Innenumfang derselben nacheinander in koaxialer Lage angeordnet umfasst: eine Stahlsaite (121); einen leitenden Ringteil (124), der aussen mit einem Isolierstoff (125) verkleidet ist, welcher unter Einwirkung eines vorbestimmten Grenzdruckes leitfähig wird, und einen isolierenden Ringteil (126), wobei die Kontakte (31, 32, 33, 34) des Kraftaufnehmerlagers regelmässig über einen Umfang zwischen dem Isolierstoff (125) und dem isolierenden Ringteil (126) verteilt sind, wodurch eine gemäss dem "EIN-AUS" =Prinzip arbeitende Bedienungsvorrichtung erzielt wird.

6. Sechsachsige Bedienungsvorrichtung nach Anspruch 4, dadurch gekennzeichnet, dass jeder Kontakt (91, 92, 93, 94) aus einem piezoelektrischen Detektor besteht, der von einem in Gegenresonanz arbeitenden Hochfrequenzgenerator gespeist wird, wodurch eine gemäss des Proportionalprinzips arbeitende Bedienungsvorrichtung erzielt wird.

7. Sechsachsige Bedienungsvorrichtung nach Anspruch 6, dadurch gekennzeichnet, dass die am Rand einer gegebenen Öffnung (A, B, C, D)

7

sich diametral gegeñberliegenden Aufnehmer (91—93; 92—94) an die Eingänge eines gemeinsamen Addiergeräts angeschlossen sind, so dass ihre Signale vor der Übertragung an die eine die analog-numerische Umwandlung der enthaltenen Informationen gestattende Trennfläche aufweisenden logischen Mittel (20) algebraisch addiert werden.

### Claims

1. A hexaxial manipulating device to be used by an operator manipulating said device single-handedly for visually directing the end (18) of a robot (10) comprising at least six independent axes with a view to moving said end along a desired path, allowing said operator to work in the natural reference system common to all human beings, comprising means (23) for decomposing and measuring each desired path element, on the one hand, in accordance with its translational components in a first spatially fixed trirectangular trihedral (OXYZ) and simultaneously, on the other hand, according to its rotational components about three spatially fixed orthogonal axes, the decomposing and measuring means for each axis being entirely independent from the decomposing and measuring means for the other axes; and logic means (20) comprising in particular an interface enabling, after digitating, all the information recovered by the decomposition of each desired path element with the aid of said decomposing and measuring means to be converted into control signals adapted to be applied directly to the organs controlling the movements of the robot according to each one of its axes, characterized in that it comprises: a central tubular support (30) provided with four apertures (A, B, C, D) shifted by 90° with respect to each other and located substantially in a plane perpendicular to the axis of said tubular support; a ring (110) having a diameter greater than that of a section of said tubular support, said ring bearing, if necessary, a handle (35) for gripping and controlling said manipulating device; elastic means (120) supporting said ring on said tubular support (30) in such a manner that in the rest position said ring is coaxial with respect to said tubular support (30), and in that each aperture (A, B, C, D) is provided with at least four force capors (1, 2, 3, 4) in a manner known *per se*.

2. A hexaxial manipulator according to claim 1, characterized in that said elastic supporting means (120) for supporting said ring (110) by said tubular support (30) comprise two bars (120—122; 121—123) arranged crosswise, and four elastic annular members (80, 81, 82, 83) which elastically support said bars at their ends in said ring, said bars extending each through two apertures (A—C; B—D) which are provided in said tubular support (30) and diametrically opposed on the same.

3. A hexaxial manipulator according to claim 1, characterized in that said elastic supporting means (120) for supporting said ring (110) on said tubular support (30) comprise four piano wires (120, 121, 122, 123) embedded each by one of its ends in said ring (110) and sliding with its second end in one of the apertures (A, B, C, D) provided in said central tubular support (30), so as to confer flexional freedom on each piano wire.

4. A hexaxial manipulator according to any one of the preceding claims, characterized in that each one of the apertures (A, B, C, D) provided in said tubular support (30) is equipped with a force collecting bearing of at least four directions according to the number of contacts (1, 2, 3, 4; 31, 32, 33, 34; 91, 92, 93, 94) uniformly distributed over the periphery of each aperture.

5. A hexaxial manipulator according to claim 4; characterized in that each force collecting bearing provided in each aperture of said tubular support comprises, successively, from the centre of said aperture to the inner periphery thereof, in a coaxial arrangement: a piano wire (121); a conductive annular member (124) externally coated with an isolating substance (125) which becomes conductive beyond a determined pressure and an isolating annular member (126), the contacts (31, 32, 33, 34) of the force collecting bearing being uniformly distributed over a circumference between said isolating substance (125) and said isolating annular member (126), whereby an "ON-OFF" type manipulator is obtained.

6. A hexaxial manipulator according to claim 4, characterized in that each contact (91, 92, 93, 94) is constituted by a piezoelectric captor fed by a high frequency generator operating in anti-resonance, whereby a proportional-control manipulator is obtained.

7. A hexaxial manipulator according to claim 6, characterized in that the diametrically opposed captors (91—93; 92—94) at the border of a given aperture (A, B, C, D) are connected to the inputs of a common adding device for algebraically adding their signals prior to transmission to the logic means (20) comprising an interface which allows an analog/numerical conversion of the information recovered.

FIG_1

FIG_2

FIG_3

FIG_4

FIG_5

FIG_6

FIG_7

FIG_8

0016668

2

FIG_9

FIG_10

FIG_11

|     | 1 | 2 | 3 | 4 |
|-----|---|---|---|---|
| A   |   |   |   |   |
| B   |   |   |   |   |
| C   |   |   |   |   |
| D   |   |   |   |   |

R:
$$\begin{matrix} 0 & 0 & 0 & 0 \\ 0 & 0 & 0 & 0 \\ 0 & 0 & 0 & 0 \\ 0 & 0 & 0 & 0 \end{matrix}$$

$X_-$:
$$\begin{matrix} 0 & 1 & 0 & 0 \\ 0 & 0 & 0 & 0 \\ 0 & 0 & 0 & 1 \\ 0 & 0 & 0 & 0 \end{matrix}$$
$\widehat{\Omega_+}/_{Z'Z}$:
$$\begin{matrix} 0 & 1 & 0 & 0 \\ 0 & 1 & 0 & 0 \\ 0 & 1 & 0 & 0 \\ 0 & 1 & 0 & 0 \end{matrix}$$

$X_+$:
$$\begin{matrix} 0 & 0 & 0 & 1 \\ 0 & 0 & 0 & 0 \\ 0 & 1 & 0 & 0 \\ 0 & 0 & 0 & 0 \end{matrix}$$
$\widehat{\Omega_-}/_{Z'Z}$:
$$\begin{matrix} 0 & 0 & 0 & 1 \\ 0 & 0 & 0 & 1 \\ 0 & 0 & 0 & 1 \\ 0 & 0 & 0 & 1 \end{matrix}$$

$Y_-$:
$$\begin{matrix} 0 & 0 & 0 & 0 \\ 0 & 0 & 0 & 1 \\ 0 & 0 & 0 & 0 \\ 0 & 1 & 0 & 0 \end{matrix}$$
$\overrightarrow{\alpha_-}/_{Y'Y}$:
$$\begin{matrix} 0 & 0 & 0 & 0 \\ 0 & 0 & 1 & 0 \\ 0 & 0 & 0 & 0 \\ 1 & 0 & 0 & 0 \end{matrix}$$

$Y_+$:
$$\begin{matrix} 0 & 0 & 0 & 0 \\ 0 & 1 & 0 & 0 \\ 0 & 0 & 0 & 0 \\ 0 & 0 & 0 & 1 \end{matrix}$$
$\widehat{\alpha_+}/_{Y'Y}$:
$$\begin{matrix} 0 & 0 & 0 & 0 \\ 1 & 0 & 0 & 0 \\ 0 & 0 & 0 & 0 \\ 0 & 0 & 1 & 0 \end{matrix}$$

$Z_+$:
$$\begin{matrix} 1 & 0 & 0 & 0 \\ 1 & 0 & 0 & 0 \\ 1 & 0 & 0 & 0 \\ 1 & 0 & 0 & 0 \end{matrix}$$
$\widehat{\beta_+}/_{X'X}$:
$$\begin{matrix} 1 & 0 & 0 & 0 \\ 0 & 0 & 0 & 0 \\ 0 & 0 & 1 & 0 \\ 0 & 0 & 0 & 0 \end{matrix}$$

$Z_-$:
$$\begin{matrix} 0 & 0 & 1 & 0 \\ 0 & 0 & 1 & 0 \\ 0 & 0 & 1 & 0 \\ 0 & 0 & 1 & 0 \end{matrix}$$
$\widehat{\beta_-}/_{X'X}$:
$$\begin{matrix} 0 & 0 & 1 & 0 \\ 0 & 0 & 0 & 0 \\ 1 & 0 & 0 & 0 \\ 0 & 0 & 0 & 0 \end{matrix}$$

TABLEAU 1

**0016668**

FIG_12

FIG_14

0 0 16 668

FIG_13

$$\begin{vmatrix} a_{11} & a_{12} \\ a_{22} & a_{22} \\ a_{31} & a_{32} \\ a_{41} & a_{42} \end{vmatrix}$$

| | | |
|---|---|---|
| X | $\begin{vmatrix} 0 & -1 \\ 0 & 0 \\ 0 & 1 \\ 0 & 0 \end{vmatrix}$ | $\dfrac{\Omega}{z'z}$ $\begin{vmatrix} 0 & -1 \\ 0 & -1 \\ 0 & -1 \\ 0 & -1 \end{vmatrix}$ |
| Y | $\begin{vmatrix} 0 & 0 \\ 0 & 1 \\ 0 & 0 \\ 0 & -1 \end{vmatrix}$ | $\dfrac{\propto}{Y'Y}$ $\begin{vmatrix} -1 & 0 \\ 0 & 0 \\ +1 & 0 \\ 0 & 0 \end{vmatrix}$ |
| Z | $\begin{vmatrix} 1 & 0 \\ 1 & 0 \\ 1 & 0 \\ 1 & 0 \end{vmatrix}$ | $\dfrac{\beta}{X'X}$ $\begin{vmatrix} 0 & 0 \\ -1 & 0 \\ 0 & 0 \\ 1 & 0 \end{vmatrix}$ |

TABLEAU 2

6